# EUROPEAN PATENT SPECIFICATION

(11) **EP 1 992 597 B1**
(45) Date of publication and mention of the grant of the patent: **08.07.2015**
(21) Application number: 07108226.7
(22) Date of filing: 15.05.2007
(51) Int. Cl.: C04B 28/04, C04B 28/18, C04B 14/04, C04B 14/20, C04B 18/24

(54) **Composition for manufacturing a fibre-reinforced building board and board so obtained.**
Zusammensetzung zur Herstellung einer faserverstärkten Bauplatte und damit hergestellte Bauplatte
Composition de fabrication d'un panneau de construction renforcé avec des fibres, et panneau ainsi obtenu

(43) Date of publication of application: 19.11.2008
(73) Proprietor: Redco, 1880 Kapelle-op-den-Bos (BE); Eternit, 1880 Kapelle-op-den-Bos (BE)
(72) Inventor: Van Der Heyden, Luc, 3190 Boortmeerbeek (BE); Rijs, Martin, 1880 Kapelle-op-den-Bos (BE)
(74) Representative: Van Steenlandt, Wim August Maria

(56) References cited:
- JP-A- 3 115 148
- JP-A- 58 176 159
- US-A1- 2002 088 584
- DATABASE EPODOC EUROPEAN PATENT OFFICE, THE HAGUE, NL; XP002460472 & CN 1 350 992 A (TAIRONG BUILDING MATERIAL CO L [CN]) 29 May 2002 (2002-05-29) -& DATABASE WPI Week 200259 Derwent Publications Ltd., London, GB; AN 2002-549147 XP002460473 & CN 1 350 992 A (TAIRONG BUILDING MATERIAL CO LTD SUZHOU) 29 May 2002 (2002-05-29)

## Description

The present invention relates to a hydraulic-setting composition for manufacturing an autoclave cured fibre-reinforced building board (see also JP 58-176159 or JP 03-115148.). More specifically, the invention concerns a dimensionally stable cellulose fibre-reinforced building board manufactured preferably by the Hatschek process and obtained by the autoclave curing of a hydraulic-setting composition.

The use of mica and wollastonite in hydraulic-setting compositions in order to improve the dimensional stability of building boards manufactured from such compositions is well known by those skilled in the art and is described in e.g. JP08-067547, JP05-186261, JP05-246746, US 2002/088584 and CN 1350992.

However the dimensional stability of the building board obtained according to this prior art appears still insufficient.

The object of the invention is to provide a hydraulic-setting composition allowing the production of a dimensionally stable fibre-reinforced building board, manufactured preferably according to the Hatschek process, and obtained by an autoclave curing of the composition.

In order to solve this problem, the invention provides a hydraulic-setting composition for manufacturing an autoclave cured fibre-reinforced building board, comprising as components :
(a) a cementitious binder,
(b) silica,
(c) reinforcing cellulose fibres,
   said composition further comprising the additional components in % with respect to the total weight of the composition at dry state :
(d) 8-12% of mica,
(e) 4-8% of wollastonite, and
(f) 2 - 6 wt % of at least one aluminium compound, selected from the group consisting of aluminium hydroxide, bauxite or boehmite, and their mixtures, capable to release Al³⁺ in autoclave curing conditions, said amount being such that the dry composition comprises 0,02-2,2% of Al³⁺ with respect to the total weight of the composition at dry state, as well as
(g) optionally other additives,
   the sum of amounts of components (a) to (g) being equal to 100 weight %.

We have found unexpectedly that the addition of said aluminium compound capable to release Al³⁺ in autoclave curing conditions further improves the wet-dry dimensional stability of a calcium silicate building board. The amount of aluminium compound in the hydraulic-setting composition is such that said composition comprises more than 0,02 weight % Al³⁺ and less than 2,2 weight %, more preferably less than 1,7 weight %, and particularly preferably not more than 1,5 weight % of Al³⁺ with respect to the initial total dry weight of the hydraulic-setting composition. Hydraulic-setting compositions comprising more than 2,2 weight % of Al³⁺ suffer from insufficient strength necessary for handling operations before autoclave curing, due to an amount of cement which is too low and the cost price of boards manufactured from them is too high, or an amount of silica which is too low which gives rise to boards of insufficient strength.

The amount of said aluminium compound is preferably in the range of from 3 to 5 weight % with respect to the total weight of the composition at dry state.

Preferably the amount of said aluminium compound is such that the weight ratio of Al³⁺/cement is in the range of from 0,02 to 0,05. A weight ratio of Al³⁺/cement of from 0,03 to 0,04 is particularly preferred. Building boards according to the present invention manufactured from compositions characterized by a Al³⁺/cement ratio lower than 0,02 have a hydric movement which is too high for render board applications using concealed joints. Compositions according to the present invention characterized by a Al³⁺/cement ratio higher than 0,05 contain an excess of unreacted aluminium compound.

Aluminium compounds with a high solubility in the alkaline cementitious matrix during the autoclave steam curing step are preferred. Aluminium hydroxide is especially preferred. Aluminium compounds having a too low solubility in the alkaline cementitious matrix, particularly the clay minerals, calcined (dehydroxylated) or not, are to be avoided. Preferably the aluminium compounds according to the invention have a D50 particle size as measured on a laser diffraction particle size analyser such as a Malvern Mastersizer diffraction type particle size analyser in the range of from 10 to 200 µm, preferably in the range of 15 to 150 µm.

The compositions used to manufacture the cellulose-fibre reinforced building boards being the object of the present invention comprise mica. The amount of mica is in the range of from 8 to 12 weight % with respect to the initial total dry weight of the hydraulic-setting composition. Compositions comprising mica in an amount of from 9 to 11 weight % are particularly preferred. Compositions comprising less than 8 weight % of mica suffer from a hydric movement which is too high for concealed joints render board applications. Compositions according to the present invention comprising more than 12 weight% of mica suffer from an insufficient interlaminar bond strength required for fixing and cutting operations and from a slow dewatering rate on a Hatschek machine. Muscovite type mica is preferred. Good results are obtained with mica having an average particle size measured by dry sieving in the range of 400-700 µm.

The compositions used to manufacture the boards according to the present invention comprise wollastonite. The amount of wollastonite ranges of from 4 to 8 weight % with respect to the initial total dry weight of the hydraulic-setting composition. Compositions according to the present invention comprising less than 4 weight % of wollastonite in the presence of mica in an amount of from 8 to 12 weight % have significantly lower processability on a Hatschek machine. Compositions according to the present invention comprising more than 8 weight % of wollastonite in the presence of mica in an amount of from 8 to 12 weight % suffer from insufficient plasticity which gives problems during cutting or sawing of the boards to obtain the desired dimensions, and a cost price which is too high. Acicular needles of wollastonite are preferred. High aspect ratio wollastonite is particularly preferred. Good results were obtained with wollastonite having an aspect ratio ranging from 5 to 20, preferably ranging from 10 to 20. Suitable wollastonite grades have a D50 particle size determined by laser granulometry ranging from 90-120 µm, preferably ranging from 40 to 70 µm.

The present invention concerns also a method for manufacturing fibre-reinforced building board, comprising the steps of mixing the above mentioned components (a) to (g) in order to form a hydraulic-setting composition,
- forming said hydraulic-setting composition into a fibre-cement product having shape and size of a building board, and
- curing said fibre-cement product in an autoclave so as to obtain a dimensionally stable fibre-reinforced building board.

The boards according to the present invention are preferably manufactured by the Hatschek process which is a wet papermaking technique. This technique consists in forming a sheet comparable to a paper, by filtration using a fluid aqueous suspension obtained by mixing essentially cement, fibres and water. This aqueous suspension has a solid content generally ranging from 2 to 15 %. The sheet, or a superposition of sheets, is then drained of water by suction and/or pressure. The fibres hold to the filter (or sieve), forming an additional screen, the mesh cells of which have a size suitable for retaining the particles, even fine particles, of cement or of other binder or additive, together with an important amount of water which contributes to the cohesion of the thick layer being formed on the screen. The retention on the sieve can be further enhanced by the addition of flocculants. The filter (or sieve) consists of a drum covered with a filter cloth installed in a tank containing the suspension; since the drum rotates in the tank, the hydrostatic pressure forces some of the water to pass through the filter cloth, whereas the solids, that is to say notably the fibres, the cement particles and other additives, build up on the screen of the drum as a thin layer whose thickness increases with the rotation of the drum. This layer is transferred, usually by means of a felt belt and further dewatered by suction through the belt, to a forming roll, on which the desired thickness of material is built up.

The fresh sheet (green product) is optionally post-compressed to densify and subsequently left to harden under atmospheric conditions (air-curing) followed by autoclaving under specific pressure, temperature and humidity conditions. The autoclaving step is generally performed within 1 week after air-curing and at temperatures in the range of from 160°C to 190°C while subjected to absolute steam pressures ranging generally from about 0,8 MPa to 1,4 MPa during preferably about 6 to 24 hours.

The hydraulic-setting composition used to manufacture the boards according to the present invention comprises cement. Suitable cements are Portland cement, blast-furnace Portland cement, trass cement, and others. Several types of Portland clinker cements can be used, but ordinary Portland cement is particularly preferred.

The hydraulic-setting composition used to manufacture the boards according to the present invention generally comprises cement in a range of from 30 to 40 weight % with respect to the initial total dry weight of the composition. A weight % in the range of from 33 to 37 % is particularly preferred.

The hydraulic-setting composition used to manufacture the boards according to the present invention comprises silica. Crystalline silica is preferred. Silica produced by sieving and grinding silica sand and characterized by a Si02 content of over 99% is particularly preferred. Suitable silicas have a specific surface as measured by the Blaine method according to NBN EN 196-6 in the range of from 2000 to 20000 cm²/g, preferably in the range of from 2500 to 15000 cm²/g, more preferably in the range of from 3000 to 6000 cm²/g. Silica with a D50 particle size as determined by laser diffraction in the range of from 2 to 28 µm, preferably of from 5 to 20 µm, more preferably of from 7 to 15 µm gives good results.

The hydraulic-setting composition used to manufacture the boards according to the present invention generally comprises silica in a range of from 32 to 40 weight % with respect to the initial total dry weight of the composition. A weight % in the range of from 33 to 37 % is particularly preferred.

Preferably the weight ratio of cement:silica is in the range of from 48:52 to 53:47, more preferably in the range of 50:50 to 52:48. If the weight ratio of cement:silica is lower than 48:52, the strength of the material before autoclave curing is too low for proper handling operations. A weight ratio of cement:silica higher than 53:47 impairs hydric dimensional stability.

The hydraulic-setting composition used to manufacture the boards according to the present invention comprises cellulose fibres. Cellulose fibres derived from chemical wood pulp are preferred. Kraft pulp is particularly preferred. Good results are obtained with bleached or unbleached cellulose fibres. Suitable pulps are processed from soft wood trees, e.g. Pinus Radiata or hard wood trees. Cellulose fibres characterized by a Kappa number in the range of 20 to 40, more particularly in the range of 20 to 30 are especially preferred. Cellulose fibres refined to a Shopper Riegler degree in the range of 15 to 65, more particularly in the range of 15 to 30 give satisfactory results. Preference is given to cellulose fibres with a length as determined according to TAPPI method T271 in the range of from 0,8 to 4 mm. Cellulose fibres with an alkali soluble content as measured according to TAPPI 212 below 3,5 % are suitable.

The hydraulic-setting composition used to manufacture the boards according to the present invention generally comprises cellulose in a range of from 4 to 10 weight % with respect to the initial total dry weight of the composition. Compositions comprising cellulose in a range of from 6 to 8 weight % are preferred.

The hydraulic-setting composition used to manufacture the boards according to the present invention optionally comprises beside cellulose fibres, other processing and/or reinforcing organic and/or inorganic fibres. Appropriate processing fibres are polyolefin fibrids, and others, and their blends. The amount of processing fibres is preferably equal to or less than 10% by weight with respect to the initial total weight in the dry state of the hydraulic-setting composition.

Examples of reinforcing inorganic fibres are glass fibres, ceramic fibres and the like, and their blends. Examples of organic reinforcing fibres are fibres of polyolefins such as polyethylene or polypropylene, of polyamide, of polyacrylonitrile, of polyester, of aramid, of polyvinylalcohol, of carbon, and the like, and their blends. The content of reinforcing fibres is preferably equal to or less than 10% by weight with respect to the initial total weight in the dry state of the hydraulic-setting composition. Preferably, the hydraulic-setting composition used to manufacture the boards according to the present invention comprises no other fibres than cellulose fibres The hydraulic-setting composition used to manufacture the boards according to the present invention possibly comprises processing aids, such as flocculants and anti-foam agents. It may further comprise fillers and/or additives, such as fly ash, ground rock, blast-furnace slags, carbonates, pozzolana, etc. The total quantity of fillers and/or additives is preferably less than 50%, more preferably less than 30% by weight with respect to the initial total weight in the dry state of the hydraulic-setting composition.

The cellulose fibre-reinforced calcium silicate boards according to the present invention are characterized by a hydric expansion (as measured according to an internal method by measuring the average dimensional changes from ovendry to soaked conditions) not higher than 1,5 mm/m, preferably not higher than 1,4 mm/m.

The building boards according to the present invention have moreover an excellent delamination resistance (as measured according to EN 12467) of at least 0,6 N/mm², preferably of at least 0,65 N/mm².

The cellulose fibre-reinforced calciumsilicate boards according to the present invention are particularly suited for use as interior backer board for tiling, interior separating wall and exterior façade backer board for render.

The examples below further illustrate the object of the present invention, but do not limit the scope of it.

### EXAMPLES

### Preparation of the samples

The composition of the dry mixtures and the test results are given in table 1.

Cellulose fibres are dispersed in water and hydrapulped; silica, mica, wollastonite, aluminium hydroxide and Portland cement are added to form a slurry of approximately 0,25 kg solids per I of slurry. The slurry was thoroughly mixed and further diluted with water to obtain approximately 0,1 kg solids per I of slurry. The slurry was formed into sheets by dewatering on a Hatschek machine. The sheets were then pressed at about 25 MPa during approximately 15 minutes, and afterwards autoclaved at 0,7 to 1 MPa for 13 to 20 hours.

### Description of the test methods

Delamination strength (interlaminar bond strength) has been determined according to EN 12467.

Hydric expansion has been tested according to an internal method by measuring the distance differences between 2 fixed points from ovendry (dried at 105°C until constant weight) to saturated conditions.

### Results

The compositions of the samples and the results are shown in table 1.

Examples1 and 2 illustrate the invention. The boards are characterized by low hydric movement (expansion) and satisfactory delamination strength.

Boards manufactured with the compositions according to comparative examples C1 and C2 do not have an optimized balance between the abovementioned properties.

Comparative example C1 shows that in the absence of wollastonite and aluminium hydroxide, the interlaminar bond strength in the presence of mica, is too low.

Replacement of part of the mica by wollastonite improves the delamination strength, as can be seen from the results obtained in the comparative example C2.

Further addition of aluminium hydroxide reduces the hydric movement while maintaining a satisfactory level of delamination strength, as can be seen from examples 1 and 2 according to the invention.

**Table 1**

| Examples | Unit | 1 | 2 | C.1 | C. 2 |
|---|---|---|---|---|---|
| Cellulose | Wt% | 7,52 | 7 | 7,53 | 7,52 |
| Cement | Wt% | 35,19 | 35,1 | 37,5 | 36,68 |
| Silica | Wt% | 36,54 | 35,1 | 38,94 | 38,09 |
| Wollastonite | Wt% | 5,71 | 5,7 | 0 | 5,96 |
| Mica | Wt% | 11,28 | 9,5 | 16,03 | 11,76 |
| Al(OH)₃ | Wt% | 3,76 | 3,8 | 0 | 0 |
| Al³⁺ | Wt% | 1,30 | 1,32 | 0,0 | 0,0 |
| Delamination strength | N/mm² | 0,64 | 0,68 | 0,52 | 0,64 |
| Average hydric expansion | mm/m | 1,27 | 1,37 | 1,60 | 1,61 |

## Claims

1. A hydraulic-setting composition for manufacturing an autoclave cured fibre-reinforced building board, comprising as components :
(a) a cementitious binder,
(b) silica,
(c) reinforcing cellulose fibres,
said composition further comprising the additional components in % with respect to the total weight of the composition at dry state :
(d) 8-12% of mica,
(e) 4-8% of wollastonite, and
(f) 2 - 6 wt % of at least one aluminium compound,selected from the group consisting of aluminium hydroxide, bauxite or boehmite, and their mixtures, capable to release Al³⁺ in autoclave curing conditions, said amount being such that the dry composition comprises 0,02-2,2% of Al³⁺ with respect to the total weight of the composition at dry state,
as well as
(g) optionally other additives,
the sum of amounts of components (a) to (g) being equal to 100 weight %.

2. The composition according to claim 1, wherein the cementitious binder is selected from the group consisting of Portland cement, blast-furnace cement, trass cement, Portland clinker and their mixtures.

3. The composition according to claims 1 or 2 , having a weight ratio of Al³⁺/cementitious binder of from 0,02 to 0,05 with respect to the dry weight of the composition.

4. The composition according to any one of claims 1 to 3, having a weight ratio of cement:silica in the range from 48:52 to 53:47.

5. The composition according to any one of claims 1 to 4, which contains 30-40% of cementitious binder, 32-40% of silica and 4-10% of reinforcing cellulose fibres, with respect to the weight of the dry composition.

6. A method for manufacturing fibres-reinforced building board, comprising the steps of
- mixing the components (a) to (g) of claim 1 in order to form a hydraulic-setting composition according to anyone of claims 1 to 5
- forming said hydraulic-setting composition into a fibre-cement product having shape and size of a building board, and
- curing said fibre-cement product in an autoclave so as to obtain a dimensionally stable fibre-reinforced building board.

7. Dimensionally stable cellulose fibre-reinforced building board, as manufactured according to claim 6.

8. Building board according to claim 7, having a hydric movement of less than 1.5 mm/m.

9. Building board according to claim 7 or 8, having an interlaminar bond strength of at least 0,6 N/mm².

10. Use of a building board according to anyone of claims 7 to 9, as interior backer board for tiling, interior separating wall or exterior façade backer board for render.

## Patentansprüche

1. Hydraulisch abbindende Zusammensetzung zur Herstellung einer autoklavengehärteten faserverstärkten Bauplatte, umfassend als Komponenten:
(a) ein zementöses Bindemittel,
(b) Siliciumdioxid,
(c) Cellulose-Verstärkungsfasern,
wobei die Zusammensetzung ferner die zusätzlichen Komponenten in %, bezogen auf das Gesamtgewicht der Zusammensetzung in trockenem Zustand, umfasst:
(d) 8-12% Glimmer,
(e) 4-8% Wollastonit und
(f) 2-6 Gew.-% mindestens einer Aluminiumverbindung, die aus der Gruppe bestehend aus Aluminiumhydroxid, Bauxit oder Böhmit und Mischungen davon ausgewählt ist und zur Freisetzung von Al³⁺ unter Autoklavenhärtungsbedingungen befähigt ist, wobei die Menge so beschaffen ist, dass die trockene Zusammensetzung 0,02-2,2% Al³⁺, bezogen auf das Gesamtgewicht der Zusammensetzung in trockenem Zustand, umfasst,
sowie
(g) gegebenenfalls andere Additive,
wobei die Summe der Mengen der Komponenten (a) bis (g) gleich 100 Gew.-% ist.

2. Zusammensetzung nach Anspruch 1, wobei das zementöse Bindemittel aus der Gruppe bestehend aus Portlandzement, Hochofenzement, Trasszement, Portlandklinker und Mischungen davon ausgewählt ist.

3. Zusammensetzung nach Anspruch 1 oder 2 mit einem Gewichtsverhältnis von Al³⁺ zu zementösem Bindemittel von 0,02 bis 0,05, bezogen auf das Trockengewicht der Zusammensetzung.

4. Zusammensetzung nach einem der Ansprüche 1 bis 3 mit einem Gewichtsverhältnis von Zement zu Siliciumdioxid im Bereich von 48:52 bis 53:47.

5. Zusammensetzung nach einem der Ansprüche 1 bis 4, die 30-40% zementöses Bindemittel, 32-40% Siliciumdioxid und 4-10% Cellulose-Verstärkungsfasern, bezogen auf das Gewicht der trockenen Zusammensetzung, enthält.

6. Verfahren zur Herstellung von faserverstärkten Bauplatten, das folgende Schritte umfasst:
- Mischen der Komponenten (a) bis (g) gemäß Anspruch 1 zur Bildung einer hydraulisch abbindenden Zusammensetzung nach einem der Ansprüche 1 bis 5,
- Formen der hydraulisch abbindenden Zusammensetzung zu einem Faserzementprodukt mit der Form und Größe einer Bauplatte und
- Härten des Faserzementprodukts in einem Autoklaven zum Erhalt einer maßhaltigen faserverstärkten Bauplatte.

7. Maßhaltige faserverstärkte Bauplatte, wie gemäß Anspruch 6 hergestellt.

8. Bauplatte nach Anspruch 7 mit einer Bewegung bei Einwirkung von Wasser von weniger als 1,5 mm/m.

9. Bauplatte nach Anspruch 7 oder 8 mit einer interlaminaren Verbundfestigkeit von mindestens 0,6 N/mm².

10. Verwendung einer Bauplatte nach einem der Ansprüche 7 bis 9 als Innenunterplatte für Fliesen, Innentrennwand oder Außenfassadenunterplatte für Putz.

## Revendications

1. Composition à prise hydraulique pour la fabrication d'un panneau de construction renforcé par des fibres, durci en autoclave, comprenant comme constituants :
(a) un liant à base de ciment,
(b) de la silice,
(c) des fibres de cellulose de renforcement,
ladite composition comprenant en outre les constituants additionnels, en pourcentage relativement au poids total de la composition à l'état sec :
(d) 8-12 % de mica,
(e) 4-8 % de wollastonite, et
(f) 2-6 % en poids d'au moins un composé d'aluminium, sélectionné dans le groupe constitué de l'hydroxyde d'aluminium, de la bauxite ou de la boehmite, et de leurs mélanges, capable de libérer de l'Al³⁺ dans des conditions de durcissement en autoclave, ladite quantité étant telle que la composition à l'état sec comprenne 0,02-2,2 % d'Al³⁺ relativement au poids total de la composition à l'état sec,
ainsi que
(g) optionnellement d'autres additifs,
la somme des quantités des constituants (a) à (g) étant égale à 100 % en poids.

2. Composition selon la revendication 1, dans laquelle le liant à base de ciment est sélectionné dans le groupe constitué du ciment Portland, du ciment de haut fourneau, du ciment de trass, du clinker de Portland et de leurs mélanges.

3. Composition selon les revendications 1 ou 2, ayant un rapport pondéral Al³⁺/liant à base de ciment de 0,02 à 0,05 relativement au poids à sec de la composition.

4. Composition selon l'une quelconque des revendications 1 à 3, ayant un rapport pondéral ciment/silice de 48:52 à 53:47.

5. Composition selon l'une quelconque des revendications 1 à 4, contenant 30-40 % de liant à base de ciment, 32-40 % de silice et 4-10 % de fibres de cellulose de renforcement, relativement au poids de la composition à l'état sec.

6. Procédé de fabrication d'un panneau de construction renforcé par des fibres, comprenant les étapes qui consistent à :
- mélanger les constituants (a) à (g) selon la revendication 1 afin de former une composition à prise hydraulique selon l'une quelconque des revendications 1 à 5,
- mettre ladite composition à prise hydraulique sous la forme d'un produit en fibrociment ayant la forme et la taille d'un panneau de construction, et
- durcir ledit produit en fibrociment en autoclave de façon à obtenir un panneau de construction renforcé par des fibres dimensionnellement stable.

7. Panneau de construction renforcé par des fibres dimensionnellement stable, fabriqué selon la revendication 6.

8. Panneau de construction selon la revendication 7, ayant un mouvement hydrique inférieur à 1,5 mm/m.

9. Panneau de construction selon la revendication 7 ou 8, ayant une adhérence interlaminaire d'au moins 0,6 N/mm².

10. Utilisation d'un panneau de construction selon l'une quelconque des revendications 7 à 9, comme panneau de base intérieur pour des carreaux, cloison intérieure, ou panneau de base extérieur pour l'enduit d'une façade.
